# EUROPEAN PATENT SPECIFICATION

(11) **EP 1 795 371 B1**
(45) Date of publication and mention of the grant of the patent: **23.07.2008**
(21) Application number: 06125376.1
(22) Date of filing: 05.12.2006
(51) Int. Cl.: B60C 9/00

(54) **High elongation cable**
Kabel mit hoher Dehnung
Cable ayant un allongement élevé

(30) Priority: 08.12.2005 US 297291; 08.12.2005 US 748448 P
(43) Date of publication of application: 13.06.2007
(73) Proprietor: THE GOODYEAR TIRE & RUBBER COMPANY, Akron, OH 44316-0001 (US)
(72) Inventor: Kish, James Christopher, Akron, OH 44319 (US); Neubauer, Robert Anthony, Medina, OH 44256 (US); Legge, Kevin Christopher, Doylestown, OH 44230 (US); Waibel, Terry John, Wadsworth, OH 44281 (US); Fuhrig, Thomas Roy, North Canton, OH 44720 (US); Reiter, Leonard James, Norton, OH 44203 (US); Andonian, Archie Arsavir Takfor, Hudson, OH 44236 (US); Tao, Quingsheng, Hudson, OH 44236 (US)
(74) Representative: Kutsch, Bernd

(56) References cited:
- EP-A- 1 386 757
- EP-A2- 1 479 535
- US-A1- 2005 126 674
- US-B1- 6 619 357
- US-B1- 6 863 103

## Description

### Field of the Invention

The disclosed invention is directed towards a steel cable construction, and the use of such steel cable as a reinforcement means in the tread belt of a tire, (see for example US-A-2005/0126674).

### Background of the Invention

The tread belt and pneumatic tires of the present invention are preferably designed for use on large earthmover vehicles which are subjected to high stress and loads under harsh environmental conditions such as in rock quarries, mines, foundries, and other areas where tires are subjected to puncture-producing and wear-inducing conditions.

The large pneumatic tires, which are typically used for earthmoving vehicles, sometimes fail due to the high stress and loads caused by the harsh environmental conditions in which they are operated. With the continual drive to improve earthmover performance, there is a continuing need to provide novel methods and tire designs for improving earthmover tire durability.

### Summary of the Invention

The invention provides in a first aspect a high elongation cable having a 3x7xM construction or a 4x7xM construction. Preferably, M comprises at least two layers, wherein the outermost layer comprises a plurality of twisted filaments, said filaments having a diameter d, wherein the spacing between said twisted filaments is less than the diameter d.

Dependent claims cover preferred embodiments of the invention.

The invention provides in a preferred aspect a high elongation cable having a 3x7xM or a 4x7xM construction, wherein M is selected from the group consisting of: [1+6+12x0.22], [3x0.20+7x0.23], [3+9x0.25], and [1+6x0.35].

### Definitions

For ease of understanding this disclosure, the following terms are disclosed:
"Cable" means at least two strands bunched or stranded together to form a reinforcing structure;
"Filament" means a generic term for a continuous strand;
"Ply" means a continuous layer of rubber-coated parallel strands;
"Strand" means a reinforcing structure formed of at least one filament. A strand may be used alone for reinforcing or multiple strands may be grouped together to form a cable.

### Brief Description of the Drawings

The invention will be described by way of example and with reference to the accompanying drawings in which:
FIG. 1 is a cross-sectional view of one half of a two-piece tire;
FIGS. 2A-2D are cross-sectional views of cable embodiments of the present invention having a 3x7xM construction;
FIG. 3 is a cross-sectional view of a second embodiment of a cable having a 4x7xM construction; and
FIGS. 4- 5 are alternative embodiments of the lay-up order in the tread belt.

### Detailed Description of the Invention

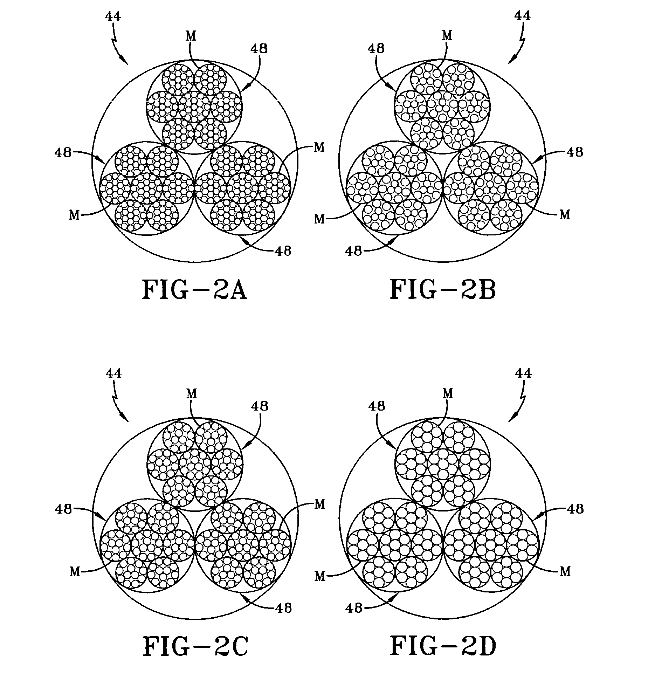

A first embodiment of a large diameter high elongation cable 44 is shown in Figs. 2A-2D. The cable 44 comprises three bundles 48 in a triangular configuration. Each bundle 48 further comprises individually pretwisted strands of wire. In this example, each bundle 48 has the same diameter and internal configuration. Each bundle 48 is a substructure of N x M type, wherein N = 7 and M is a cord of preferably circular or mostly circular cross-section. The illustrated cable 44 has the overall construction of 3 x 7 x M, excluding filament dimensions. M can be for example [1+6+12x0.22] as shown in Fig. 2A, [3x0.20+7x0.23] as shown in Fig. 2B, [3+9x0.25] as shown in Fig. 2C, or [1+6x0.35] as shown in Fig. 2D, or as described in more detail below.

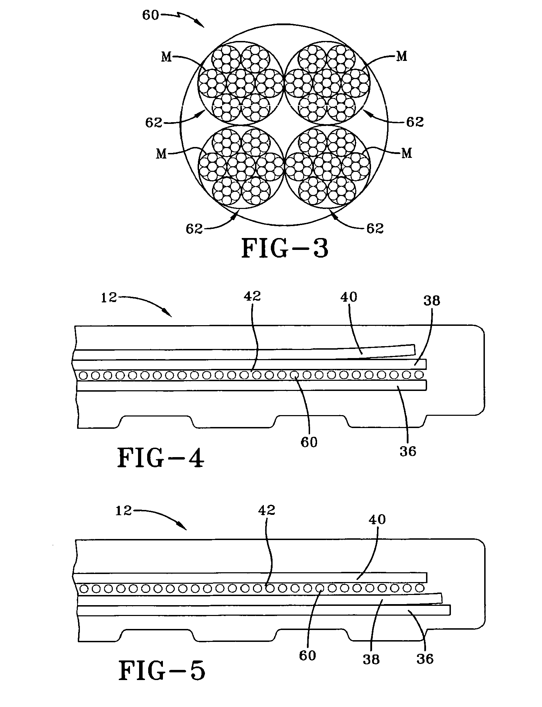

A second embodiment of a large diameter high elongation cable 60 is shown in Fig. 3. The cable 60 comprises of four bundles 62 in a quad configuration. Each bundle 62 further comprises individually pretwisted strands of wire. In this example, each bundle 62 has the same diameter and internal configuration. Each bundle 62 is a substructure of N x M type, wherein N = 7 and M is a cord of preferably circular or mostly circular cross-section. The illustrated cable 60 has the overall construction of 4x7xM, excluding filament dimensions. M can be for example [1+6+12x0.22] (not shown), [3x.20+7x0.23] (not shown), [3+9x0.25] (not shown), or [1+6x0.35] (shown in Fig. 3), or as described in more detail below.

In a preferred embodiment, M has two or more layers, wherein the first layer comprises at least one filament, preferably a centered filament. The outermost layer comprises a plurality of twisted filaments wherein the spacing between the filaments in the outermost layer is less than one diameter of the filaments in that layer.

It is preferred that the strands described above are twisted. The above cable constructions have utility in applications where high extension (greater than 3%) is needed and the cord diameter is greater than 2.0 mm. The above cable constructions may be used in a two piece tire as described in more detail, below. How the above cable constructions are not limited to a two piece tire, and may be used in belts of conventional tires such as truck tires.

The center voids in the above described configurations could be optionally filled with a filler cord. The filler cord is preferably non-metallic and can be comprised of, for example, nylon, polyester or fiberglass. The filler cord could also be a metal cord such as steel.

### Example 1

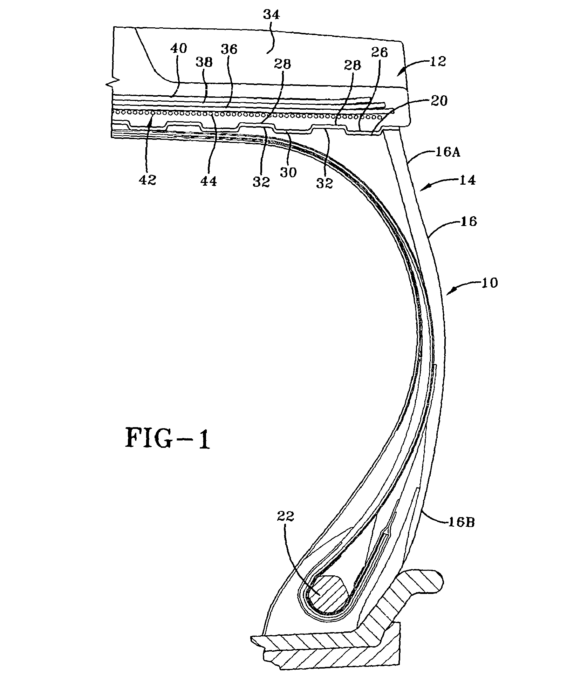

With reference to Fig. 1, there is illustrated a cross-section of a two-piece pneumatic tire 10. The tire 10 includes a ground engaging, circumferentially extending tread belt 12 mounted on a radially reinforced, beaded tire carcass 14. The beaded tire carcass 14 generally includes a pair of tire sidewalls 16 extending radially inwardly from the outer circumferential surface 20 of the tire carcass and terminating at their radial extremities in a pair of bead wires 22. The sidewalls 16 each have an upper portion 16A in the shoulder region of tire carcass 14 and radially inward of the maximum section width of the tire carcass, and a lower portion 16B adjacent the bead wires 22 and radially inward of the maximum section width of the tire carcass 14. The details of the construction of tire carcass 14 are described in US-B- 6,561,241, and US-A- 2003-0098110.

The ground engaging, circumferentially extending tread belt 12 is manufactured, i.e. built or assembled and cured, separately from the tire carcass 14 and is removably mounted onto the tire carcass 14. The underside or inner circumference surface of tread belt 12 may optionally comprise one or more annular lands 26 and grooves 28 that mate with grooves 30 and lands 32 of tire carcass 14 to restrain tread belt 12 from lateral or axial movement with respect to the carcass 14. The tire tread belt 12 includes a tread portion 34 and a plurality of belts layers 36, 38, 40.

The radially inner belt layers 36, 38 are reinforced with cables. Each tread belt layer 36, 38 has the cables oriented at an angle in the range of 15° to 60° relative to the circumferential direction. Preferably, the cables in these adjacent layers 36, 38 are inclined at relatively equal angles but oppositely oriented. The radially outermost third layer 40 has strands oriented at an angle greater than 80° relative to the circumferential direction.

The reinforcing means in the three layers 36, 38, 40 may be constructed from any conventional reinforcing strands or any strands that may be developed that are useful for reinforcing elastomeric articles. Known materials include aramid, polyester including PET and PEN, all types of nylon, carbon fiber, steel, and fiberglass. Alternatively, the reinforcing means in the three layers 36, 38, 40 may be a high elongation cable such as described in the examples above or a commercially available high elongation cable. The strands in the third layer 40 may the same or have a different strand construction as the strands in the two layers 36, 38.

Radially inward of these belt layers 36, 38, 40 is a reinforcement layer 42 which is also a strength and load carrying layer. The layer is reinforced with cables 44 oriented at 0°, plus or minus 1-3°, relative to the circumferential direction. The belt layer 42 encircles the tire tread belt 12 and restricts the radially outward growth of the tread belt 12 that can be caused by serious deflection in the tire carcass 14. By keeping the tire tread belt 12 from expanding radially outward, the tread 34 will maintain a more flat tread profile thereby improving tread life and durability. The zero degree oriented layer 42 also eliminates the need for a larger number of belt layers than specified herein.

The reinforcing means in the zero degree layer 42 may be constructed from any conventional reinforcing strands or any strands that may be developed that are useful for reinforcing elastomeric articles. Known materials include aramid, polyester including PET and PEN, all types of nylon, carbon fiber, steel, and fiberglass. Alternatively, the reinforcing means in layer 42 may be a high elongation cable such as described in the examples above or a commercially available high elongation cable.

While one lay-up order of the belts 36, 38, 40, 42 is illustrated, the lay-up order may be modified to vary the tread belt characteristics. The zero-degree layer 42 may be located between the inclined belt layers 36, 38, see FIG. 4, or radially outward of the inclined belt layers 36, 38, see FIG. 5. Alternatively, the 90° layer 40 may be located radially beneath the inclined belt layers 36, 38.

While three tread belts, in combination with a single zero degree belt, are illustrated, it is within the scope of the invention to use other numbers of tread belt layers as needed. The combination of a removable tire tread belt 12 with a tire carcass 14 for use with large earthmoving vehicles is important in that it enables a portion of a tire 10 to be replaced instead of the entire tire in the event that one portion of the tire, i.e., the tire belt 12 or the tire carcass 14, wears out before the other part. Also, it may be desirable to have different types of tread designs such as, for example, driving or steering tread designs. This feature allows for a less expensive means of changing the tire tread to construct the appropriate style of desired tire. This feature would greatly reduce the cost of storing spare tires and could even extend the operating time of the tires.

## Claims

1. A high elongation cable (44, 60) having a 3x7xM construction or a 4x7xM construction, M being a strand.

2. The cable of claim 1 wherein M comprises two or more layers.

3. The cable of claim 1 wherein M comprises at least two layers, wherein the outermost layer comprises a plurality of twisted filaments, said filaments having a diameter d, and wherein the spacing between said twisted filaments is less than said diameter d.

4. The cable of at least one of the previous claims wherein M is selected from the group consisting of: [1+6+12x0.22], [3x0.20+7x0.23], [3+9x0.25], and [1+6x0.35], wherein said notations may exclude filament dimensions.

5. The cable of at least one of the previous claims having a tensile strength of at least 27,500 N and at least 3% elongation.

6. The cable of at least one of the previous claims wherein the cable has a tensile strength of at least 50,000 N and at least 3% elongation.

7. The cable of at least one of the previous claims wherein the cable (44, 60) has a quad configuration or a triangular configuration of bundles (48, 62), each bundle having the same diameter and the same internal configuration.

8. The cable of at least one of the previous claims wherein the cable (44, 60) has a first and a second layer, wherein the first layer is at least one filament, preferably a centered filament, and wherein the second layer is an outermost layer of a plurality of twisted filaments.

9. The cable of at least one of the previous claims, wherein at least one void in the cable construction, preferably the center voids, is filled with a filler cord, said filler cord preferably being nylon, polyester, fiberglass or steel.

10. A tire comprising a higher elongation cable according to at least one of the previous claims.

## Patentansprüche

1. Hochdehnbares Seil (44, 60) mit einer 3x7xM-Konstruktion oder einer 4x7xM-Konstruktion, wobei M eine Litze ist.

2. Seil nach Anspruch 1,
wobei M zwei oder mehr Schichten umfasst.

3. Seil nach Anspruch 1,
wobei M zumindest zwei Schichten umfasst, wobei die äußerste Schicht eine Vielzahl von verdrehten Filamenten umfasst, wobei die Filamente einen Durchmesser d aufweisen, und wobei der Abstand zwischen den verdrehten Filamenten kleiner ist als der Durchmesser d.

4. Seil nach zumindest einem der vorhergehenden Ansprüche,
wobei M aus der Gruppe ausgewählt ist, die aus: [1+6+12x0,22], [3x0,20+7x0,23], [3+9x0,25] und [1+6x0,35] besteht, wobei die Notationen Filamentabmessungen ausschließen können.

5. Seil nach zumindest einem der vorhergehenden Ansprüche,
das eine Zugfestigkeit von zumindest 27.500 N und eine Dehnung von zumindest 3 % aufweist.

6. Seil nach zumindest einem der vorhergehenden Ansprüche,
wobei das Seil eine Zugfestigkeit von zumindest 50.000 N und eine Dehnung von zumindest 3 % aufweist.

7. Seil nach zumindest einem der vorhergehenden Ansprüche,
wobei das Seil (44, 60) eine quadratische Konfiguration oder eine dreieckige Konfiguration von Bündeln (48, 62) aufweist, wobei jedes Bündel den gleichen Durchmesser und die gleiche interne Konfiguration aufweist.

8. Seil nach zumindest einem der vorhergehenden Ansprüche,
wobei das Seil (44, 60) eine erste und eine zweite Schicht aufweist, wobei die erste Schicht zumindest ein Filament, bevorzugt ein zentriertes Filament ist, und wobei die zweite Schicht eine äußerte Schicht einer Vielzahl von verdrehten Filamenten ist.

9. Seil nach zumindest einem der vorhergehenden Ansprüche,
wobei zumindest ein Leerraum in der Seilkonstruktion, bevorzugt die mittleren Leerräume, mit einem Füllkord gefüllt ist, wobei der Füllkord bevorzugt Nylon, Polyester, Glasfaser oder Stahl ist.

10. Reifen mit einem hochdehnbaren Seil nach zumindest einem der vorhergehenden Ansprüche.

## Revendications

1. Câble à allongement élevé (44, 60) possédant une structure 3x7xM ou une structure 4x7xM, M représentant un toron.

2. Câble selon la revendication 1, dans lequel M comprend deux couches ou plus.

3. Câble selon la revendication 1, dans lequel M comprend au moins deux couches, la couche la plus externe comprenant plusieurs filaments torsadés, lesdits filaments possédant un diamètre d et l'écartement entre lesdits filaments torsadés étant inférieur audit diamètre d.

4. Câble selon au moins une des revendications précédentes, dans lequel M est choisi parmi le groupe constitué par [1+6+12x0,22], [3x0,20+7x0,23], [3+9x0,25] et [1+6x0,35], lesdites notations pouvant exclure les dimensions des filaments.

5. Câble selon au moins une des revendications précédentes, possédant une résistance à la traction d'au moins 27.500 N et un allongement d'au moins 3 %.

6. Câble selon au moins une des revendications précédentes, dans lequel le câble possède une résistance à la traction d'au moins 50.000 N et un allongement d'au moins 3 %.

7. Câble selon au moins une des revendications précédentes, dans lequel le câble (44, 60) possède une configuration carrée ou une configuration triangulaire de faisceaux (48, 62), chaque faisceau possédant le même diamètre et possédant la même configuration interne.

8. Câble selon au moins une des revendications précédentes, dans lequel le câble (44, 60) possède une première et une deuxième couche, la première couche représentant au moins un filament, de préférence un filament centré et la deuxième couche représentant une couche la plus externe constituée par plusieurs filaments torsadés.

9. Câble selon au moins une des revendications précédentes, dans lequel au moins un vide dans la structure du câble, de préférence les vides au centre, est rempli avec un câblé faisant office de matière de charge, ledit câblé faisant office de matière de charge représentant de préférence du nylon, du polyester, des fibres de verre ou de l'acier.

10. Bandage pneumatique comprenant un câble à allongement élevé selon au moins une des revendications précédentes.
